# EUROPÄISCHE PATENTSCHRIFT

(11) **EP 2 551 862 B1**
(45) Veröffentlichungstag und Bekanntmachung des Hinweises auf die Patenterteilung: **15.04.2015**
(21) Anmeldenummer: 11176001.3
(22) Anmeldetag: 29.07.2011
(51) Int. Cl.: H01F 29/02, H02M 5/12

(54) **Stromversorgungsanordnung mit Mitteln zur Spannungserhöhung**
Power supply assembly with means for increasing voltage
Agencement d'alimentation en courant doté de moyens d'augmentation de tension

(43) Veröffentlichungstag der Anmeldung: 30.01.2013
(73) Patentinhaber: AEG Power Solutions GmbH, 59581 Warstein-Belecke (DE)
(72) Erfinder: Paul, Wolfgang, 59581 Warstein-Belecke (DE); Wallmeier, Peter, 59556 Lippstadt (DE)
(74) Vertreter: Graefe, Jörg

(56) Entgegenhaltungen:
- DE-B- 1 200 938
- FR-A- 1 447 120
- GB-A- 596 830
- US-A- 3 711 747
- US-A- 3 938 031

## Beschreibung

Die vorliegende Erfindung betrifft eine Stromversorgungsanordnung mit einem ersten Transformator mit wenigstens zwei sekundärseitigen Anzapfungen für sekundärseitiges Außenleiterpotential und mit einer Anzapfung für sekundärseitiges Neutralleiterpotential, wobei im Nennbetrieb des ersten Transformators zwischen einer ersten der Anzapfungen für sekundärseitiges Außenleiterpotential und der Anzapfung für sekundärseitiges Neutralleiterpotential eine Nennspannung des ersten Transformators abfällt, und mit zwei Leistungsstellern, über die die Anzapfungen für sekundärseitiges Außenleiterpotential mit einem ersten Anschluss eines Ausgangs der Stromversorgungsanordnung verbunden sind.

Derartige Stromversorgungsanordnungen sind aus einer Vielzahl von Patentschriften und Veröffentlichungen von Patentanmeldungen der Anmelderin oder von Rechtsvorgängern der Anmelderin bekannt. Auch in Lehrbüchern sind derartige Stromversorgungsanordnungen beschrieben, zum Beispiel in dem Buch "Thyristorised Power Controllers" von G. K. Dubey, S. R. Doradla, A. Joshi und R. M. K. Sinha, ISBN 0-85226-190-X aus dem Jahr 2009.

Die Leistungssteller einer solchen Stromversorgungsanordnung werden in der Regel so angesteuert, dass sich eine Spannungsfolgesteuerung ergibt. Eine häufige Verwendung dieser Stromversorgungsanordnungen findet man bei Reaktoren zur Herstellung von Polysilicium durch chemische Dampfabscheidung (CVD) nach dem Siemensverfahren. Auch solche Verwendungen der Stromversorgungsanordnungen sind durch Patentanmeldungen der Anmelderin bekannt geworden.

Ein Vorteil der Stromversorgungsanordnungen mit Spannungsfolgesteuerung ist, dass diese Spannungen in einem hohen Spannungsbereich von zum Beispiel 0 bis 2500 V bei einem im Vergleich zu anderen Stromversorgungseinrichtungen hohen Leistungsfaktor und einem hohen Leistungsbereich zur Verfügung stellen können.

Bei einem Prozess zur Herstellung von Polysilicium nach dem Siemensverfahren werden Siliciumsaatstäbe (auch als Siliciumdünnstäbe oder als *hair pins* bezeichnet) mit einem anfänglich hohen elektrischen Widerstand von einem Strom durchflossen, der anfänglich von einer hohen Spannung getrieben wird. Nach einer gewissen Erwärmung der Siliciumdünnstäbe sinkt der Widerstand schlagartig. Umgangssprachlich spricht man davon, dass die Silicumdünnstäbe gezündet haben. Nach der Zündung kann die Spannung reduziert werden.

Der durch die Siliciumdünnstäbe fließende elektrische Strom erwärmt die Siliciumdünnstäbe auf eine für die Dampfabscheidung nach dem Siemensverfahren notwendige Temperatur. Durch die Dampfabscheidung schlägt sich an den Silicumdünnstäben Silicium nieder, wodurch deren Durchmesser vergrößert und diese sich zu Siliciumstäben entwickeln. Mit zunehmendem Durchmesser der Siliciumstäbe sinkt der elektrische Widerstand für den durch die Siliciumstäbe fließenden Strom. Daher wird im Laufe des Prozesses der Dampfabscheidung die an den Siliciumstäben liegende Spannung weiter reduziert. Es ergibt sich also, dass bei einem Dampfabscheidungsprozess am Anfang vor dem Zünden der Siliciumdünnstäbe von der Stromversorgungsanordnung die höchste Spannung und am Ende des Prozesses die niedrigste Spannung bereitgestellt werden muss.

Je nach Betriebsweise des Prozesses und je nach Reaktor sind unterschiedliche anfängliche Spannungen notwendig oder vorteilhaft. Bislang ist es üblich die Stromversorgungsanordnungen so auszulegen, dass die von dem ersten Transformator bereitstellbare sekundäre Nennspannung der erforderlichen maximalen Spannung entspricht. Dieses macht u. U. individuell angepasste Transformatoren und an die Nennspannung angepasste Leistungssteller erforderlich. Beides macht die Herstellung von Stromversorgungsanordnungen aufwendig und teuer.

Hier setzt die vorliegende Erfindung an.

Der vorliegenden Erfindung lag das Problem zugrunde eine Stromversorgungsanordnung der eingangs genannten Art so zu verbessern, dass eine Standardisierung der Stromversorgungsanordnungen oder wenigstens wichtiger Komponenten der Stromversorgungsanordnungen möglich macht.

Dieses Problem wird erfindungsgemäß dadurch gelöst, dass die Schaltungsanordnung ein Mittel zur Erhöhung der Spannung über die Nennspannung hinaus aufweist, dass auf der Sekundärseite des ersten Transformators angeordnet ist, wobei das Mittel (T2) zur Erhöhung der Spannung an die Sekundärseite des ersten Transformators angeschlossen ist und mit elektrischem Strom aus der Sekundärseite des ersten Transformators versorgbar ist.

Stromversorgungsanordnungen mit Mitteln zur Erhöhung der Spannung über die Nennspannung sind zum Beispiel aus den Dokumenten DE 12 00 938 B und GB 596830 bekannt. Diese haben aber keine Stromversorgung aus der Sekundärseite des ersten Transformators, sondern aus anderen Quellen, die bei Stromversorungsanordnungen gemäß dem Anspruch 1 nicht vorhanden sind. Auch die Dokumente US 3 938 031, US 3 711 747 und FR 1 447 120 offenbaren Stromversorgungsanordnungen mit Mitteln zur Spannungserhöhung, die aber Teile des ersten Transformators umfassen. Dieses hat den Nachteil, dass der Transformator und die Verbindung zwischen den Anzapfungen für sekundärseitiges Außenleiterpotential, den Leistungsstellern und dem Außenleiteranschluss des Ausgangs geändert werden muss, was der gewünschten Standardisierung zuwiderläuft.

Das Vorsehen des Mittels zur Erhöhung der Spannung am Ausgang der Stromversorgungsanordnung über die Nennspannung des ersten Transformators bzw. die am ersten Transformator abgegriffene Spannung hinaus durch das Mittel zur Erhöhung der Spannung ermöglicht es einen ersten Transformator auch dann zu verwenden, wenn die gewünschte Nennspannung der Stromversorgungsanordnung die Nennspannung des ersten Transformators überschreitet. Ein erster Transformator kann daher auch für Stromversorgungsanordnungen genutzt werden, bei denen es bisher erforderlich war einen anderen Transformator mit einer höheren Nennspannung einzusetzen.

Vorzugsweise ist das Mittel zur Erhöhung der Spannung ein zuschaltbarer zweiter Transformator. Die Zuschaltung des zweiten Transformators kann durch Schalter oder Leistungssteller erreicht werden. Für das Zuschalten können auch die an den Anzapfungen des ersten Transformators für sekundärseitiges Außenleiterpotential angeschlossenen Leistungssteller vorgesehen sein.

Besonders vorteilhaft ist es, wenn der zweite Transformator ein Spartransformator ist.

Eine Mittelanzapfung des zweiten Transformators kann an der ersten Anzapfung des ersten Transformators, d.h. der Anzapfung für das gegenüber dem sekundärseitigen Neutralleiterpotential des ersten Transformators höchsten sekundärseitigen Außenleiterpotential angeschlossen sein. Der Anschluss kann unter Zwischenschaltung eines Leistungsstellers und/oder eines Schalters erfolgen, mit dem der Spartransformator als Mittel zur Spannungserhöhung zugeschaltet werden kann.

Eine Anzapfung an einem ersten Ende einer Transformatorspule des Spartransformators kann an einer Anzapfung des ersten Transformators, vorzugsweise an der Anzapfung des ersten Transformators für das zweithöchste sekundärseitige Außenleiterpotential angeschlossen sein. Der Anschluss kann unter Zwischenschaltung eines Leistungsstellers und/oder eines Schalters erfolgen, mit dem der Spartransformator als Mittel zur Spannungserhöhung zugeschaltet werden kann.

Eine Anzapfung an einem zweiten Ende der Transformatorspule des Spartransformators kann mit dem ersten Anschluss des Ausgangs verbunden sein. Die Verbindung kann unter Zwischenschaltung eines Leistungsstellers und/oder eines Schalters erfolgen, mit dem der Spartransformator als Mittel zur Spannungserhöhung zugeschaltet werden kann.

Bei den in einer erfindungsgemäßen Stromversorgungsanordnung verwendeten Leistungsstellern kann es sich um Thyristorleistungssteller handeln. Bei den verwendeten Schaltern kann es sich um Schalter aus Stromrichterventilen, insbesondere aus Thyristoren, GTOs, IGBT oder anderen handeln. Die Schalter sind vorteilhaft bidirektional.

Weitere Merkmale und Vorteile der vorliegenden Erfindung werden anhand der nachfolgenden Beschreibung von zwei Ausführungsbeispielen näher erläutert. Darin zeigen
- Fig. 1: ein Schaltbild eines ersten Ausführungsbeispiels und
- Fig. 2: ein Schaltbild eines zweiten Ausführungsbeispiels.

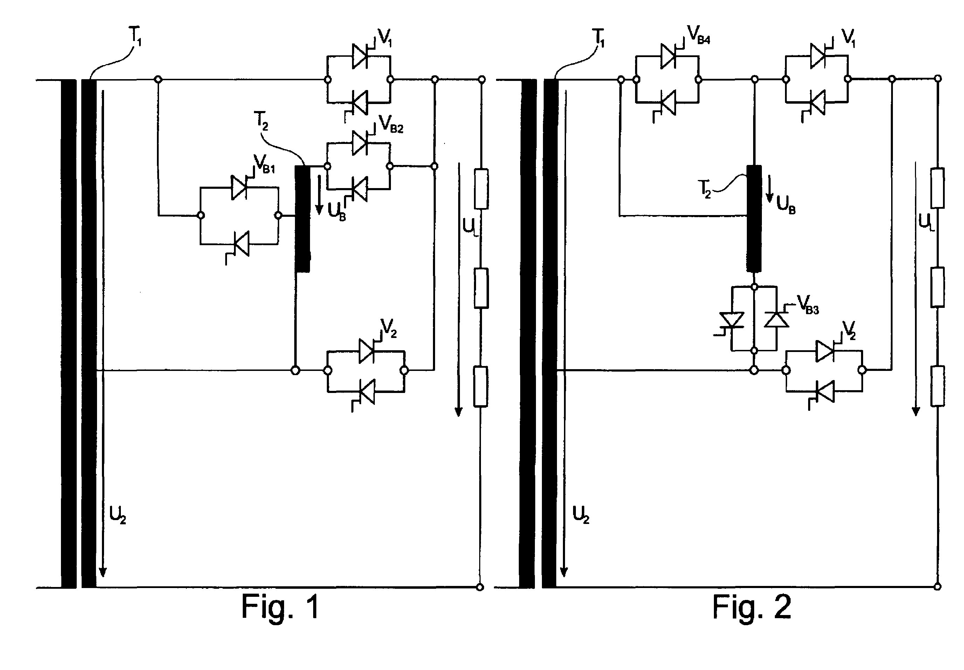

Die in den Figuren 1 und 2 dargestellten Schaltbilder von erfindungsgemäßen Schaltungsanordnungen umfassen einen ersten Transformator T1, zwei Leistungssteller V1, V2, die an sekundärseitige Anzapfungen eines ersten Transformators T1 angeschlossen sind, eine zweistufige Spannungsfolgesteuerung (nicht näher dargestellt) mit der die zwei Leistungssteller V1 und V2 angesteuert werden, und ein Mittel T2 zur Erhöhung der Spannung welches über bidirektionalen Schalter oder Leistungssteller zugeschaltet werden kann.

Der erste Transformator T1 und die beiden Leistungssteller V1, V2 sind in bekannter Art und Weise miteinander verbunden. Der erste Transformator T1 weist sekundärseitig drei Anzapfungen auf, wobei an zwei Anzapfungen ein sekundärseitiges Außenleiterpotenzial bereitgestellt wird, während an der dritten Anzapfung ein sekundärseitiges Neutralleiterpotenzial bereitgestellt wird. Die beiden Anzapfungen für das Außenleiterpotenzial sind über die Leistungssteller V1, V2 mit einem ersten Anschluss, dem Außenleiteranschluss eines Ausgangs der erfindungsgemäßen Schaltungsanordnungen verbunden. Die Anzapfung für das Neutralleiterpotenzial ist mit einem zweiten Anschluss, einem Neutralleiteranschluss des Ausgangs verbunden. An den Ausgang sind als Last drei Widerstände angeschlossen, bei denen es sich zum Beispiel um Siliciumstäbe oder Siliciumdünnstäbe handeln kann, die in einem Reaktor zur Herstellung von Polysilicium durch chemische Dampfabscheidung nach dem Siemensverfahren angeordnet sind.

Die Leistungssteller V1, V2 können durch die Spannungsfolgesteuerung in bekannter Art und Weise angesteuert werden, um jede beliebige Spannung zwischen der 0 V und der Nennspannung des ersten Transformators T1 einzustellen.

Zum Bereitstellen einer höheren Spannung als der Nennspannung des ersten Transformators T1 am Ausgang der Stromversorgungsanordnungen sind die Mittel T2 zum Erhöhen der Spannung über die bei Nennbetrieb an einer ersten der Anzapfungen für sekundärseitiges Außenleiterpotenzial anliegenden Nennspannung des Transformators vorgesehen, die in beiden Ausführungsbeispielen durch einen zweiten Transformator gebildet werden. Bei diesem zweiten Transformator handelt es sich um einen Spartransformator T2.

Die beiden in den Figuren 1 und 2 dargestellten Ausführungsbeispiele unterscheiden sich dadurch wie der Spartransformator T2 in die übrige Schaltungsanordnung eingebunden bzw. zuschaltbar ist.

Im ersten Ausführungsbeispiel ist eine Mittelanzapfung der Transformatorspule des Spartransformators T2 über einen bidirektionalen Schalter VB1 aus zwei antiparallel geschalteten Thyristoren mit der ersten Anzapfung des ersten Transformators T1, d.h. der Anzapfung für das gegenüber dem sekundärseitigen Neutralleiterpotenzial höchsten Außenleiterpotenzial verbunden. Eine Anzapfung an einem ersten Ende der Transformatorspule des Spartransformators T2 ist dagegen mit der Anzapfung des ersten Transformators mit dem gegenüber dem sekundärseitigen Neutralleiterpotenzial zweithöchsten Außenleiterpotenzial verbunden. Eine Anzapfung an einem zweiten Ende der Transformatorspule des Spartransformators T2 ist über einen Leistungssteller VB2 aus zwei antiparallel geschalteten Thyristoren mit dem Außenleiteranschluss des Ausgangs verbunden.

Sind der Schalter VB1 und der Leistungssteller VB2 eingeschaltet und die Leistungssteller V1 und V2 ausgeschaltet, fällt am Ausgang eine Spannung UL ab, die der Summe aus der Sekundärspannung des ersten Transformators T1 und einer Spannung UB entspricht, die zwischen dem zweiten Ende der Transformatorspule des Spartransformators T2 und der Mittelanzapfung der Transformatorspule des Spartransformators T2 abfällt. Durch eine Phasenanschnittsteuerung des Leistungsstellers VB2 kann die Höhe dieser Spannung eingestellt werden.

Sind dagegen der Schalter VB1 oder der Leistungssteller VB2 ausgeschaltet, kann über die Leistungssteller V1, V2 in bekannter Art und Weise die Ausgangsspannung UL durch die Spannungsfolgesteuerung eingestellt werden.

In einer Variante des ersten Ausführungsbeispiels können die Thyristoren VB1 als Leistungssteller verwendet werden und mit einer Phasenanschnittsteuerung angesteuert werden. Das zweite Ende der Transformatorspule des Spartransformators T2 kann in diesem Fall unmittelbar mit dem Außenleiteranschluss des Ausgangs verbunden sein. Das Zuschalten des Spartransformators T2 und das Einstellen der Ausgangsspannung erfolgt dann im Fall der Spannungserhöhung durch den Leistungssteller VB1. Die Thyristoren VB2 können dann als bidirektionale Schalter verwendet werden oder durch eine Leitung ersetzt werden.

Im zweiten Ausführungsbeispiel ist die Mittelanzapfung der Transformatorspule des Spartransformators T2 unmittelbar mit der ersten Anzapfung der Sekundärwicklung des ersten Transformators T1, d.h. für das gegenüber dem sekundärseitigen Neutralleiterpotenzial höchsten Außenleiterpotenzial verbunden. Eine Anzapfung an einem ersten Ende der Transformatorspule des Spartransformators T2 ist beim zweiten Ausführungsbeispiel über einen bidirektionalen Schalter VB3 aus zwei antiparallel geschalteten Thyristoren mit der Anzapfung des ersten Transformators T1 mit dem gegenüber dem sekundärseitigen Neutralleiterpotenzial zweithöchsten Außenleiterpotenzial verbunden. Die Anzapfung am zweiten Ende der Transformatorspule des Spartransformators T2 ist beim zweiten Ausführungsbeispiel über einen bidirektionalen Schalter VB4 aus zwei antiparallel geschalteten Thyristoren mit der ersten Anzapfung der Sekundärwicklung des ersten Transformators T1, d.h. der Anzapfung für das höchste Außenleiterpotenzial verbunden. Sind der Schalter VB4 und der Leistungssteller V2 ausgeschaltet und der Leistungssteller V1 und der Schalter VB3 eingeschaltet, fällt am Ausgang der Schaltungsanordnung gemäß dem zweiten Ausführungsbeispiel eine Spannung UL ab, die der Summe der Sekundärspannung des ersten Transformators T1 und der Spannung zwischen der zweiten Anzapfung der Transformatorspule des Spartransformators T2 und der Mittelanzapfung der Transformatorspule des Spartransformators T2 abfällt. Die Höhe der Ausgangsspannung kann über den Leistungssteller V1 eingestellt werden.

Ist dagegen der Schalter VB4 eingeschaltet und der Schalter VB3 ausgeschaltet, kann die Schaltungsanordnung gemäß dem zweiten Ausführungsbeispiel wie eine herkömmliche Schaltungsanordnung mit Spannungsfolgesteuerung verwendet werden.

Als Bauelemente für die Leistungssteller oder bidirektionalen Schalter können auch beliebige andere geeignete Bauelemente, insbesondere Leistungshalbeiterbauelemente verwendet werden, wie zum Beispiel IGBT. Auch die Verwendung von Schützen oder Relais als bidirektionale Schalter ist möglich.

## Patentansprüche

1. Stromversorgungsanordnung mit einem ersten Transformator (T1) mit einer Sekundärseite mit wenigstens zwei sekundärseitigen Anzapfungen für sekundärseitiges Außenleiterpotential und mit einer Anzapfung für sekundärseitiges Neutralleiterpotential, wobei im Nennbetrieb des ersten Transformators zwischen einer ersten der Anzapfungen für sekundärseitiges Außenleiterpotential und der Anzapfung für sekundärseitiges Neutralleiterpotential eine Nennspannung abfällt, und mit zwei Leistungsstellern (V1, V2), über die die Anzapfungen für sekundärseitiges Außenleiterpotential mit einem Außenleiteranschluss eines Ausgangs der Stromversorgungsanordnung verbunden sind,
**dadurch gekennzeichnet, dass**
die Stromversorgungsanordnung ein Mittel (T2) zur Erhöhung der Spannung zwischen dem Außenleitanschluss des Ausgangs und einem Neutralleiteranschluss des Ausgangs über die Nennspannung hinaus aufweist,
das Mittel (T2) zur Erhöhung der Spannung auf der Sekundärseite des ersten Transformators angeordnet ist, wobei
das Mittel (T2) zur Erhöhung der Spannung an die Sekundärseite des ersten Transformators angeschlossen ist und
mit elektrischem Strom aus der Sekundärseite des ersten Transformators versorgbar ist.

2. Stromversorgungsanordnung nach Anspruch 1 , **dadurch gekennzeichnet, dass** das Mittel (T2) zur Erhöhung der Spannung ein zuschaltbarer zweiter Transformator ist.

3. Stromversorgungsanordnung nach Anspruch 2, **dadurch gekennzeichnet, dass** der zweite Transformator ein Spartransformator (T2) ist.

4. Stromversorgungsanordnung nach Anspruch 3, **dadurch gekennzeichnet, dass** eine Mittelanzapfung des zweiten Transformators (T2) ggf. unter Zwischenschaltung eines Leistungsstellers (VB1 , VB2) oder eines Schalters (VB1 , VB2, VB3, VB4) an der ersten Anzapfung des ersten Transformators angeschlossen ist.

5. Stromversorgungsanordnung nach Anspruch 3 oder 4, **dadurch gekennzeichnet, dass** eine Anzapfung an einem ersten Ende einer Transformatorspule des Spartransformators ggf. unter Zwischenschaltung eines Leistungsstellers oder eines Schalters an einer Anzapfung des ersten Transformators, vorzugsweise an der Anzapfung des ersten Transformators für das zweithöchste sekundärseitige Außenleiterpotential angeschlossen ist.

6. Stromversorgungsanordnung nach einem der Ansprüche 3 bis 5, **dadurch gekennzeichnet, dass** eine Anzapfung an einem zweiten Ende der Transformatorspule des Spartransformators ggf. unter Zwischenschaltung eines Leistungsstellers oder eines Schalters mit dem ersten Anschluss des Ausgangs verbunden ist.

## Claims

1. Power supply arrangement comprising a first transformer (T1) having a secondary side having at least two secondary-side taps for a secondary-side outer conductor potential and having one tap for a secondary-side neutral conductor potential, wherein, during rated operation of the first transformer, there is a rated voltage drop between a first of the taps for the secondary-side outer conductor potential and the tap for the secondary-side neutral conductor potential, and comprising two power controllers (V1, V2), via which the taps for the secondary-side outer conductor potential are connected to an outer conductor connection of an output of the power supply arrangement, **characterized in that**
the power supply arrangement has a means (T2) for increasing the voltage between the outer conductor connection of the output and a neutral conductor connection of the output to above the rated voltage,
the means (T2) for increasing the voltage is arranged on the secondary side of the first transformer, wherein
the means (T2) for increasing the voltage is connected to the secondary side of the first transformer, and
electric current can be supplied to said means (T2) from the secondary side of the first transformer.

2. Power supply arrangement according to Claim 1, **characterized in that** the means (T2) for increasing the voltage is a connectable second transformer.

3. Power supply arrangement according to Claim 2, **characterized in that** the second transformer is an autotransformer (T2).

4. Power supply arrangement according to Claim 3, **characterized in that** a centre tap of the second transformer (T2) is connected to the first tap of the first transformer, possibly with a power controller (VB1, VB2) or a switch (VB1, VB2, VB3, VB4) interposed.

5. Power supply arrangement according to Claim 3 or 4, **characterized in that** a tap at a first end of a transformer coil of the autotransformer is connected to a tap of the first transformer, preferably to the tap of the first transformer for the second highest secondary-side outer conductor potential, possibly with a power controller or a switch interposed.

6. Power supply arrangement according to one of Claims 3 to 5, **characterized in that** a tap at a second end of the transformer coil of the autotransformer is connected to the first connection of the output, possibly with a power controller or a switch interposed.

## Revendications

1. Agencement d'alimentation en courant comprenant un premier transformateur (T1) avec un côté secondaire comprenant au moins deux prises du côté secondaire pour le potentiel de conducteur extérieur du côté secondaire et une prise pour le potentiel de conducteur neutre du côté secondaire, dans lequel, en mode nominal du premier transformateur, entre une première des prises pour le potentiel de conducteur extérieur du côté secondaire et la prise pour le potentiel de conducteur neutre du côté secondaire, une tension nominale diminue, et comprenant deux actionneurs de puissance (V1, V2), par le biais desquels les prises pour le potentiel de conducteur extérieur du côté secondaire sont connectées à un raccord de conducteur extérieur d'une sortie de l'agencement d'alimentation en courant,
**caractérisé en ce que**
l'agencement d'alimentation en courant présente un moyen (T2) pour augmenter la tension entre le raccord de conducteur extérieur de la sortie et un raccord de conducteur neutre de la sortie au-delà de la tension nominale,
le moyen (T2) pour augmenter la tension est disposé du côté secondaire du premier transformateur,
le moyen (T2) pour augmenter la tension étant raccordé au côté secondaire du premier transformateur et
pouvant être alimenté en courant électrique provenant du côté secondaire du premier transformateur.

2. Agencement d'alimentation en courant selon la revendication 1, **caractérisé en ce que** le moyen (T2) pour augmenter la tension est un deuxième transformateur pouvant être connecté dans le circuit.

3. Agencement d'alimentation en courant selon la revendication 2, **caractérisé en ce que** le deuxième transformateur est un autotransformateur (T2).

4. Agencement d'alimentation en courant selon la revendication 3, **caractérisé en ce qu'**une prise centrale du deuxième transformateur (T2) est raccordée éventuellement en interposant un actionneur de puissance (VB1, VB2) ou un commutateur (VB1, VB2, VB3, VB4) au niveau de la première prise du premier transformateur.

5. Agencement d'alimentation en courant selon la revendication 3 ou 4, **caractérisé en ce qu'**une prise est raccordée au niveau d'une première extrémité d'une bobine de transformateur de l'autotransformateur éventuellement en interposant un actionneur de puissance ou un commutateur au niveau d'une prise du premier transformateur, de préférence au niveau de la prise du premier transformateur pour le deuxième potentiel le plus élevé de conducteur extérieur du côté secondaire.

6. Agencement d'alimentation en courant selon l'une quelconque des revendications 3 à 5, **caractérisé en ce qu'**une prise est connectée au premier raccord de la sortie au niveau d'une deuxième extrémité de la bobine de transformateur de l'autotransformateur éventuellement en interposant un actionneur de puissance ou un commutateur.
